# EUROPÄISCHE PATENTSCHRIFT

(11) **EP 2 958 727 B1**
(45) Veröffentlichungstag und Bekanntmachung des Hinweises auf die Patenterteilung: **05.09.2018**
(21) Anmeldenummer: 14705774.9
(22) Anmeldetag: 20.02.2014
(51) Int. Cl.: B29C 44/44

(54) **VERFAHREN UND VORRICHTUNG ZUR HERSTELLUNG EINES PARTIKELSCHAUMSTOFFTEILS**
METHOD AND DEVICE FOR PRODUCING A FOAM PARTICLE PART
PROCÉDÉ ET DISPOSITIF POUR PRODUIRE UNE PIÈCE EN MOUSSE PARTICULAIRE

(30) Priorität: 20.02.2013 DE 102013002849; 26.07.2013 DE 102013108053
(43) Veröffentlichungstag der Anmeldung: 30.12.2015
(73) Patentinhaber: Kurtz GmbH, 97892 Kreuzwertheim (DE)
(72) Erfinder: SOMMER, Harald, 97907 Hasloch am Main (DE); KURTZ, Walter, 97907 Hasloch am Main (DE); REUBER, Norbert, 97851 Bergrothenfels (DE)
(74) Vertreter: Patronus IP Patent- und Rechtsanwälte
(86) Internationale Anmeldenummer: PCT/EP2014/053325
(87) Internationale Veröffentlichungsnummer: WO 2014/128214

(56) Entgegenhaltungen:
- EP-A1- 1 813 408
- EP-A1- 2 671 633
- WO-A1-2010/010010
- DE-A1- 1 704 984
- FR-A1- 2 149 529

## Beschreibung

Die vorliegende Erfindung betrifft ein Verfahren und eine Vorrichtung zur Herstellung eines Partikelschaumstoffteils. Insbesondere betrifft die vorliegende Erfindung ein Verfahren und eine Vorrichtung zur Herstellung eines Partikelschaumstoffteils aus expandierbaren Partikeln auf Basis von thermoplastischem Polyurethan.

Partikelschaumstoffteile auf Basis thermoplastischer Polyurethane sind aus der WO 94/20568 bekannt. Diese Partikelschaumstoffteile werden aus expandierbaren, partikelförmigen, thermoplastischen Polyurethanen hergestellt. Zur Formteilherstellung werden die vorgeschäumten, gegebenenfalls druckbeladenen thermoplastischen Polyurethanpartikel in eine beheizbare Form gegeben und soweit erhitzt, dass die Partikel miteinander verschweißt werden. Das Erhitzen erfolgt durch Beaufschlagen mit Wasserdampf. Wenn nötig, kann vor der Formteilherstellung eine Druckbeladung der Partikel erfolgen. Nach dem Entformen soll das Formteil bis zur Gewichtskonstanz getempert werden. Die Temperung erfolgt bei Temperaturen von 20-120°C. Die thermoplastischen Polyurethanpartikel können mit einem Treibmittel, wie zum Beispiel Butan oder CO₂ versehen sein. Als Treibmittel können auch feste Treibmittel verwendet werden, die beim Erwärmen Gas abspalten, wie Azolcarbonamid oder p-Toluolsulfonsäurehydracit.

Aus der WO 2014/011537 A1 geht ein Verfahren zum Herstellen von Schuhsohlen aus thermoplastischen Polyurethan-Schaumstoffpartikel hervor.

Weitere Verfahren zum Herstellen von Partikelschaumstoffteilen gehen aus der DE 1 243 123 A, der DE 1 704 984 A, der US 4,822,542 und der US 6,220,842 B1 hervor.

Der Vorteil von Partikelschaumstoffteilen aus Partikeln auf Basis von thermoplastischem Polyurethan (TPU-Partikel) liegt in der hohen Elastizität im Vergleich zu Partikelschaumstoffteilen auf Basis von anderen Kunststoffen, insbesondere Polystyrol und Polypropylen.

Es wurden deshalb große Anstrengungen unternommen, derartige Partikelschaumstoffteile auf Basis von Polyurethan der Massenfertigung zugänglich zu machen. Insbesondere sind derartige Partikel Schaumstoffe auf Basis von Polyurethan aufgrund ihrer mechanischen Eigenschaften für Schuhsohlen von größtem Interesse.

Geschäumte Schuhsohlen auf Basis thermoplastischen Polyurethans gehen aus der DE 10 2005 050 411 A1 hervor. Weiterhin ist es aus der WO 00/44821 bekannt, geschäumtes thermoplastisches Polyurethan für Schuhwerk ("footwear") zu verwenden.

Die Herstellung von Schuhsohlen aus geschäumten Partikeln aus thermoplastischem Polyurethan geht auch aus der WO 2012/065926 A1 hervor. Die geschäumten Polyurethanpartikel werden hierbei in ein Matrixmaterial eingebettet, das aus einem Polyurethanschaum besteht. Hier wird somit ein Hybridmaterial ausgebildet. Aufgrund der Eigenschaften der geschäumten Polyurethanpartikel weisen die Schuhsohlen gute Dämpfungseigenschaften auf, können mit geringer Kraft gebogen werden und besitzen hohe Rückstellkräfte ("higher rebound resilience").

Aus der WO 2008/087078 A1 geht ein weiteres Hybridmaterial, enthaltend eine Matrix aus Polyurethan und darin enthaltenen geschäumten Partikeln aus thermoplastischem Polyurethan, sowie ein Verfahren zur Herstellung solcher Hybridmaterialien hervor. Diese Hybridmaterialien werden als Fahrradsattel, Polsterungen und Schuhsohlen verwendet.

In der WO 2013/013784 A1 ist ein weiteres Verfahren zur Herstellung einer Sohle oder eines Sohlenteiles eines Schuhes beschrieben, bei dem die Sohle aus geschäumtem, thermoplastischen Elastomer auf Urethanbasis (TPU, E-TPU, TPE-U) und/oder auf der Basis von Polyether-Block-Amid (PEBA) ausgebildet ist. Die Schaumstoffpartikel werden vorzugsweise mit einem Bindemittel verbunden. Als Bindemittel wird ein Zwei-Komponenten-Polyurethan-System verwendet.

Weiterhin gehen aus der DE 10 2009 029 286 A1 Polyurethanschuhsohlen hervor, die aus einem Polyurethanintegralschaumstoff ausgebildet sind.

In der WO 2010/010010 A1 sind expandierbare, treibmittelhaltige thermoplastische Polymer-Blends offenbart, die thermoplastisches Polyurethan (TPU) und Styrolpolymerisat enthalten. Die bevorzugten Gewichtsanteile von thermoplastischem Polyurethan liegen zwischen 5 und 95 und die Gewichtsanteile von Styrolpolymerisat zwischen 5 und 95, wobei sich die Gewichtsanteile von thermoplastischem Polyurethan und Styrolpolymerisat zu 100 Teilen addieren. Der Polymer-Blend kann ein weiteres thermoplastisches Polymer enthalten.

Aus der WO 2013/182555 A1 ist ein Verfahren zum Herstellen eines Partikelschaumstoffteils aus thermoplastischen Polyurethanpartikeln bekannt, bei dem die Schaumstoffpartikel zur Beförderung in einem Gasstrom mit einem Wasser enthaltenden Gleitmittel benetzt werden. Hierdurch soll ein Verkleben der Schaumstoffpartikel während des Transportes vermieden werden. Die Schaumstoffpartikel werden mittels Düsen mit Wasser bespritzt.

Zusammenfassend kann festgehalten werden, dass es seit langem intensive Bestrebungen gibt, Partikelschaumstoffteile auf Basis thermoplastischer Polyurethane (WO 94/20568 A1) herzustellen, da derartige Kunststoffe besondere mechanische Eigenschaften bezüglich Elastizität, Rückstellkräfte und Biegsamkeit besitzen. Es gibt unterschiedliche Lösungen zum Herstellen derartiger Kunststoffkörper. Es wurde auch vorgeschlagen, die Polyurethanpartikel in ein Hybridmaterial einzubetten (WO 2008/087078 A1, WO 2012/065926 A1, WO 2013/013784 A1).

Grundsätzlich wäre es einfacher und kostengünstiger die Schaumstoffpartikel ohne eine zusätzliche Matrix miteinander zu verschweißen, wie es bei den Hybridmaterialien der Fall ist. Partikelschaumstoffteilen aus Polypropylen oder Polystyrol werden seit langem in großindustriellen Umfang durch Verschweißen der Schaumstoffpartikel ohne zusätzliche Matrix hergestellt. Es sind bereits Sportschuhe auf dem Markt, bei denen ein Teil der Sohle aus einem Partikelschaumstoffteil auf Polyurethanbasis ausgebildet ist, ohne dass ein Matrixmaterial zum Binden der Partikel verwendet wird. Diese Sportschuhe sind jedoch sehr teuer. Dies liegt zum einem an ihren außergewöhnlichen mechanischen Eigenschaften und andererseits an der begrenzten verfügbaren Menge, da die Herstellung von Partikelschaumstoffteilen aus expandierbaren thermoplastischen Polyurethanpartikeln (eTPU-Partikel) nach wie vor erhebliche Probleme bereitet. Da eTPU-Partikel hohe gegenseitige Adhäsionskräfte aufweisen, kleben einzelne Partikel in einer lockeren Schüttung aneinander und verklumpen. Dies beeinträchtigt die Dosierung und den Füllvorgang. Mit den bisher bekannten Verfahren ist eine Massenproduktion von Partikelschaumstoffteilen auf Basis von eTPU-Partikeln nicht stabil durchführbar. Der Ausschuss ist im Vergleich zur Produktion von Partikelschaumstoffteilen auf Grundlage anderer Materialien erheblich größer. Der Durchsatz ist gering.

Die EP 1 813 408 A1 beschreibt ein Verfahren zum Befüllen von Formwerkzeugen mit expandierten Polymerpartikeln. Die Polymerpartikel werden mit einem Trägergas einer Füllvorrichtung zugeführt und anschließend mittels der Füllvorrichtung mit dem Trägergas in das Formwerkzeug eingebracht. Als Trägergas sind Luft, Stickstoffgas, Edelgase, Kohlendioxid geeignet. Das bevorzugte Trägergas ist Luft. Die Füllvorrichtung ist über eine Transportleitung mit einem Druckfüllbehälter verbunden. In dem Druckfüllbehälter befinden sich expandierte Polymerpartikel, die mit dem Trägergas beaufschlagt sind Die Füllvorrichtung ist ein Füllinjektor, der gegenüber handelsüblichen Füllinjektoren noch mit einer Zufuhr für Wasserdampf oder ein anderes erwärmtes Gas versehen ist. Der Füllvorrichtung kann zusätzlich zu der Partikel-Trägergas-Mischung Wasserdampf zugeführt werden. Der Wasserdampf kann bereits in der Füllvorrichtung mit der Partikel-Trägergas-Mischung gemischt werden. Bevorzugt ist dies jedoch nicht, da je nach Druck-, Temperatur- und Mischungsverhältnissen die Partikel in der Füllvorrichtung vorzeitig aufschäumen und die Füllvorrichtung verstopfen können. Bevorzugt werden die Polymerpartikel-Trägergas-Mischung und der Wasserdampf getrennt voneinander aus der Füllvorrichtung in das Formwerkzeug zugeführt.

Aus der DE 1 704 984 geht ein Verfahren zur kontinuierlichen Herstellung biegsamer Polystyrol-Kunststoffschaumplatten hervor. Hierbei wird granulares Polystyrolkunststoffmaterial unter Hinzugabe von gesättigtem Dampf expandiert. Die expandierten Perlen werden mit heißer Luft getrocknet. Durch das Trocknen der kondensierten Feuchtigkeit des Dampfes wird dessen Eintritt in die Zellen der Perlen verhindert. Durch diesen Heiz- und Trocknungsvorgang verringert sich die Gefahr des Klumpens der Perlen. Die vorgedehnten, getrockneten Perlen werden mittels heißer, trockener Druckluft einem Formhohlraum zugeführt. Nach dem Füllen des Formhohlraums werden die Perlen unter Zugabe von Dampf miteinander verschweißt.

Aus der EP 496 015 A geht eine Vorrichtung zum Herstellen von Partikelschaumstoffteilen hervor, die einen Druckbehälter aufweist, in dem expandierte Polymerpartikel gelagert werden und unter Druck hieraus abgezogen und einer Form zugeführt werden können. Eine Dampfzuführleitung führt durch den Druckbehälter hindurch zu den beiden Formhälften des Formwerkzeuges.

Die WO 2010/010010 A1 ist bereits in der Beschreibungseinleitung der vorliegenden Patentanmeldung diskutiert. Sie offenbart expandierbare, treibmittelhaltige thermoplastische Polymer-Blends, die thermoplastisches Polyurethan (TPU) und Styrolpolymerisat enthalten.

Aus der DE 2 240 366 A geht ein Verfahren zur Herstellung von oberflächengeschützten Gegenständen aus Partikelschaumstoff hervor. Die Schaumstoffpartikel werden durch Zugabe von Dampf expandiert. Die expandierten Schaumstoffpartikel werden 5 bis 40 Stunden gelagert. Danach werden die Partikel in einer Befeuchtungsstation befeuchtet, wobei sie mit einer Mischeinrichtung mit Wasser und einem Netzmittel besprüht werden. Die derart benetzten Partikel werden mit komprimierter Luft der Form zugeführt. Den befeuchteten Partikeln wird Hochfrequenzenergie zugeführt, sodass das Wasser dampfförmig wird. Die Menge der zugeführten Wärmeenergie ist abhängig von der Wassermenge, der Art des Netzmittels, den physikalischen Eigenschaften der Partikel, die Polystyrolteilchen sind, dem in ihnen eingeschlossenen Gas, der vorherigen Lagerzeit und weitere Parameter.

Der Erfindung liegt die Aufgabe zugrunde, ein Verfahren und eine Vorrichtung zur Herstellung eines Partikelschaumstoffteils zu schaffen, mit welchen ein Formwerkzeug zuverlässig und vollständig mit Schaumstoffpartikeln gefüllt wird, selbst wenn die Schaumstoffpartikel hohe gegenseitige Adhäsionskräfte aufweisen, wie es beispielsweise bei Schaumstoffpartikeln auf Polyurethanbasis der Fall ist.
Die Aufgabe wird durch ein Verfahren und eine Vorrichtung gemäß den unabhängigen Ansprüchen gelöst. Vorteilhafte Ausgestaltungen sind in den jeweiligen Unteransprüchen angegeben.

Das Verfahren zur Herstellung eines Partikelschaumstoffteils umfasst folgende Schritte:
- Zuführen von Schaumstoffpartikel von einem Materialbehälter mittels einer Leitung zu einem Formwerkzeug, wobei die Schaumstoffpartikel mit einem Treibgas in der Leitung befördert werden, und
- thermoplastisches Verschweißen der Schaumstoffpartikel im Formwerkzeug zum Partikelschaumstoffteil unter Zuführung von Wärme.
Den zuzuführenden Schaumstoffpartikeln wird Wasserdampf hinzugegeben. Durch das Zugeben von Wasserdampf zu den zuzuführenden Schaumstoffpartikeln sind diese mit Wasserdampf während ihres Transportes vom Materialbehälter zum Formwerkzeug benetzt, wodurch sich deren Gleiteigenschaften verbessern. Die Benetzung der Oberfläche der Schaumstoffpartikel führt zu einer Verminderung der Adhäsionskräfte, so dass die Gefahr einer Verklumpung der Schaumstoffpartikel gering ist.
Durch das Zugeben von Wasserdampf wird ein gleichmäßiges Benetzen der Schaumstoffpartikel bewirkt. Die Menge an Wasserdampf kann so dosiert werden, dass alle Schaumstoffpartikel gleichmäßig benetzt werden und die Schaumstoffpartikel nicht aktiviert werden und sich miteinander verbinden.

Die Zuführung des Wasserdampfes kann zusätzlich im Materialbehälter und/oder an einer oder mehreren Stellen entlang der Leitung erfolgen.
Die Zugabe von Wasserdampf bewirkt zudem eine Erwärmung der Schaumstoffpartikel, so dass die Schaumstoffpartikel bereits vorgewärmt sind, wenn sie in das Formwerkzeug gelangen. Das thermoplastische Verschweißen der Schaumstoffpartikel erfolgt hierdurch schneller und zuverlässiger.
Luft ist das bevorzugte Treibgas, da es kostengünstig ist und alle erforderlichen physikalischen Eigenschaften besitzt. An Stelle von Luft kann auch ein Inertgas eingesetzt werden, wie z.B. Kohlendioxid. Wasserdampf ist als alleiniges Treibgas ungeeignet, da Wasserdampf die Schaumstoffpartikel aktivieren würde, wodurch sie in der Leitung verklumpen würden. Zudem würde ein Großteil des Wasserdampfes kondensieren, wodurch ein erheblicher Druckabfall erzeugt werden würde. Der Transport der Schaumstoffpartikel wäre nicht gewährleistet. Weiterhin wäre die Menge an Wasser, die dem Formraum zugeführt werden würde, erheblich, was das Verschweißen der Schaumstoffpartikel beeinträchtigt.

Die Schaumstoffpartikel werden von dem Materialbehälter entlang eines Transportweges dem Formwerkzeug zugeführt, wobei vorzugsweise an mehreren Stellen entlang des Transportweges den Schaumstoffpartikeln Wasserdampf hinzugegeben wird. Die mit dem Wasserdampf zugeführte Wärmemenge ist so bemessen, dass die Schaumstoffpartikel nicht vor dem Erreichen des Formwerkzeuges vollständig aktiviert werden und bereits auf dem Transportweg miteinander verschweißt werden. Daher wird vorzugsweise die Menge an Wasserdampf exakt dosiert. Die Menge des zuzuführenden Wasserdampfes hängt von unterschiedlichen Parametern ab, wie z.B. die Strömungsmenge der zuzuführenden Schaumstoffpartikel, die Querschnittsfläche und die Geometrie der Leitungen, dem Material der Schaumstoffpartikel, etc. Die Einstellung der zugeführten Menge an Wasserdampf erfolgt durch Einstellen des Druckes, mit welchen der Wasserdampf zumindest einer Düse zugeführt wird, mit welcher er in die Leitung des Transportweges eingespeist wird. Hierbei ist auch die Querschnittsfläche der Öffnung der Düse zu berücksichtigen. Grundsätzlich besteht auch die Möglichkeit, den Wasserdampf durch Verändern der Größe der Öffnung der Düse einzustellen.

Bei der Zugabe von Wasserdampf kondensiert dieser zum Großteil an den Schaumstoffpartikeln. Da bei der Kondensation des Wasserdampfes dieser sein Volumen reduziert, erfolgt durch die Zugabe des Wasserdampfes in die aus dem Treibgas und den Schaumstoffpartikeln bestehende Strömung keine oder nur eine sehr geringe Druckerhöhung. Durch die Zugabe des Wasserdampfes, insbesondere an mehreren Stellen der Leitung, ändert sich somit die Strömungsdynamik kaum gegenüber einem herkömmlichen System ohne Zugabe von Wasserdampf.

Es gibt Materialzusammensetzungen auf Polyurethanbasis, die bereits bei 50°C klebrig werden. Schaumstoffpartikel, die aus solchem eTPU ausgebildet sind, sollten daher nicht über 50°C im Bereich des Transportweges erwärmt werden. Mit anderen Materialzusammensetzungen auf Polyurethanbasis sind höhere Temperaturen möglich.

Da einerseits die Schaumstoffpartikel nicht über eine bestimmte Temperatur im Transportweg erwärmt werden sollen und andererseits während des gesamten Transportweges Wasserdampf vorhanden sein sollte, ist es vorteilhaft, an mehreren Stellen entlang des Transportweges Wasserdampf zuzuführen. Hierdurch kann auch bereits kondensierter Wasserdampf ersetzt werden, so dass entlang des Transportweges eine in etwa gleichmäßige Wasserdampfbeaufschlagung erzielt wird.
Vorzugsweise wird die Menge an Wasserdampf derart eingestellt, dass an der Oberfläche aller Schaumstoffpartikel sich ein dünner Film aus kondensiertem Wasser bildet, der die Adhäsionswirkung der Wasserstoffpartikel herabsetzt. Je mehr Wasserdampf zugegeben wird, desto stärker werden die Oberflächen der Schaumstoffpartikel benetzt. Durch die Zugabe von Wasserdampf wird jedoch auch Wärme zugeführt, wobei die Wärmemenge nicht so groß sein darf, dass die Oberflächen der Schaumstoffpartikel aktiviert werden. Daher müssen bei der Bestimmung der Menge an Wasserdampf die entgegengesetzten Anforderungen aufgrund der Benetzung und der Vermeidung einer Aktivierung ausgeglichen werden.
Durch das Zugeben an mehreren Stellen entlang des Transportweges wird der Film immer wieder aufgefrischt, so dass möglichst über den gesamten Transportweg eine zuverlässige Förderung der Schaumstoffpartikel möglich ist.

Der Wasserdampf wird den Schaumstoffpartikeln an einer in Transportrichtung dem Materialbehälter nachgeordneten Treibdüse und/oder an einem oder mehreren Abschnitten der Förderleitung zugegeben. Insbesondere erfolgt die Zugabe an Stellen oder Bereichen vor Kurven und/oder Engstellen der Leitung vom Materialbehälter zum Formwerkzeug.
Der Wasserdampf wird vorzugsweise mit einer Temperatur von 100 bis 140 °C zugegeben.
Der Wasserdampf steht bei der Zugabe zu den Schaumstoffpartikeln vorzugsweise unter einem Druck, der dem Druck in dem Gefäß (Materialbehälter oder Förderleitung) entspricht, in dem sich die Schaumstoffpartikel befinden.
Die Menge des zugegebenen Wasserdampfes (bei 100°C und 1 bar) beträgt etwa das 20- bis 500-fache des Volumens des Formraums des Formwerkzeuges.
Vorzugsweise werden die Schaumstoffpartikel unter Druckerhöhung konditioniert, wobei die konditionierten Schaumstoffpartikel dem Materialbehälter zugegeben werden und dort unter einem bestimmten Druck vorgehalten werden. Der Druck im Materialbehälter liegt vorzugsweise im Bereich von 2 bis 5 bar. Durch das Konditionieren der Schaumstoffpartikel werden sie mit Luft beladen, die als Treibmittel wirkt. Da das Konditionieren allmählich erfolgt, beispielsweise über einen Zeitraum von 2 bis 24 Stunden, behalten die komprimierten Schaumstoffpartikel eine glatte Oberfläche.

Während des Zuführens von Schaumstoffpartikel vom Materialbehälter zum Formwerkzeug wird der Druck in der Leitung in dem Formwerkzeug derart eingestellt, dass er etwas geringer als im Materialbehälter ist. Hierdurch entsteht einerseits eine Strömung vom Materialbehälter zum Formwerkzeug und andererseits werden durch den Druck die Schaumstoffpartikel klein gehalten, so dass sie möglichst wenig miteinander kollidieren und die Gefahr, dass sie aneinander haften und verklumpen, gering gehalten wird. Im Formwerkzeug beträgt der Druck vorzugsweise etwa 0 bis 3 bar und insbesondere etwa 0,2 bis 1 bar weniger als im Materialbehälter. Bei Verwendung von Treibluft können die Schaumstoffpartikel auch gegen einen Gegendruck gefördert werden. So kann der Druck im Materialbehälter etwa 0,05 bis 0,15 bar kleiner als Formwerkzeug sein.

Die Schaumstoffpartikel können im Materialbehälter vereinzelt werden. Die Vereinzelung erfolgt beispielsweise durch Zuführen eines Gas- bzw. Luft- und/oder Dampfstroms, der die Schaumstoffpartikel im Materialbehälter verwirbelt. Dieser Gasstrom wird im Folgenden als Fluidisierungsstrom bezeichnet. Anstelle oder in Kombination mit einer Verwirbelung können zum Vereinzeln der Schaumstoffpartikel auch Vereinzelungswalzen, eine Zellenradschleuse, eine Revolverkammer, ein Siebboden (Zwischenboden) durch den die Partikel aufgrund einer Druckdifferenz oder (Rüttel-)Bewegung hindurchgepresst werden und/oder eine Schneckenfüllung vorgesehen sein.

Die Schaumstoffpartikel werden vorzugsweise zunächst vereinzelt der Förderleitung zugeführt und in der Förderleitung in einem Gasstrom, insbesondere Luftstrom, der mit dem Wasserdampf angereichert ist, möglichst mit Abstand zueinander transportiert, so dass die einzelnen Schaumstoffpartikel zuverlässig den Transportweg passieren und in das Formwerkzeug gelangen.

Der Verklumpung während des Transportes entgegenwirkende Mittel und Effekte sind nachfolgend aufgeführt, die einzeln oder in Kombination angewandt werden können:
- Hinzugeben von Wasserdampf zu den Schaumstoffpartikeln, wodurch die Adhäsionsfähigkeit der Schaumstoffpartikel herabgesetzt wird und deren Gleitvermögen erhöht wird.
- Fördern der Schaumstoffpartikel in einem erhöhten Druckniveau, wodurch deren Größe klein gehalten wird, wodurch die Packungsdichte in der Leitung gering gehalten werden kann und gleichzeitig ein hoher Strom von expandierenden Schaumstoffpartikeln pro Zeiteinheit erzielt wird. Die Schaumstoffpartikel können vor dem Fördern konditioniert werden oder auch unkonditioniert unter Druckbeaufschlagung gefördert werden.
- Vereinzeln der Schaumstoffpartikel im Materialbehälter, so dass die Schaumstoffpartikel mit möglichst wenig Kontakt mit anderen Schaumstoffpartikeln durch die Leitung transportiert werden.
- Beschichten der Schaumstoffpartikel mit einem Gleitmittel, wie z.B. Wachs.
- Einblasen eines Pulvers/Staubs als Gleitmittel zu den zu transportierenden Schaumstoffpartikeln.
- Bewegen, insbesondere Rütteln, der Leitung und/oder des Formwerkzeugs während des Befüllens. Die Leitung ist hierzu vorzugsweise als biegsamer Schlauch ausgebildet.

Da der Transport der Schaumstoffpartikel ein stochastisches System ist, kann nicht vollständig vermieden werden, dass einzelne Schaumstoffpartikel miteinander in Kontakt treten. Durch das Hinzugeben von Wasserdampf zu den Schaumstoffpartikeln wird verhindert, dass die miteinander in Berührung tretenden Schaumstoffpartikel nicht auf Dauer aneinander haften bleiben, verklumpen und die Leitung oder Bereiche des Formwerkzeuges versperren.

Grundsätzlich ist es auch möglich, nicht konditionierte Schaumstoffpartikel zu verwenden und/oder die Befüllung des Formwerkzeuges nicht unter Druck durchzuführen. Dann ist es zweckmäßig, wenn das Formwerkzeug aus zumindest zwei zueinander beweglichen Teilen besteht, so dass der Formraum nach dem Befüllen desselben durch Zusammenfahren der beiden Teile verringert werden kann, um die darin befindlichen Schaumstoffpartikel zu verdichten. Ein solches Formwerkzeug wird auch als Crack-Spalt-Formwerkzeug bezeichnet. Ein Crack-Spalt-Formwerkzeug kann auch grundsätzlich in Kombination mit einer Druckbefüllung vorgesehen sein, wobei dann jedoch die Verdichtung durch das Zusammenführen der beiden Teile des Formwerkzeuges nur um einen kleinen Weg ausgeführt wird, da durch die Druckbefüllung bereits eine hohe Befüllungsdichte erzielt wird. Bei manchen Kunststoffkörpern ist eine hohe Verdichtung mittels eines Crack-Spalt-Werkzeuges nachteilig. Dies gilt insbesondere bei Kunststoffkörpern mit unterschiedlicher Dicke, da dünnere Abschnitte wesentlich stärker als die dickere Abschnitte verdichtet werden. Eine solche ungleichmäßige Verdichtung ist normalerweise nicht erwünscht. Weiterhin entsteht ein anisotropes Schrumpfverhalten mit in Schließrichtung des Crackspaltes geringerem Schrumpf.

Für ein Druckbefüllen ist das Formwerkzeug mit einem dichten Formraum ausgebildet, wobei an den Formraum Druckventile angeschlossen sind, aus welchen die Treib- bzw. Füllluft beim Befüllen des Formwerkzeuges bei Erreichen eines bestimmten Druckes austritt.

Der zum Transport der Schaumstoffpartikel zugeführte Wasserdampf ist vorzugweise ein Sattdampf, d.h. ein gesättigter, trockener Dampf. An kalten Oberflächen, wie den noch nicht erwärmten Schaumstoffpartikeln, kondensiert der Wasserdampf zu Wasser. Da der Wasserdampf beim Kondensieren zu Wasser erheblich sein Volumen reduziert, entstehen durch das Zuführen von Wasserdampf keine Druck- bzw. Volumenprobleme.

Die Schaumstoffpartikel sind vorzugsweise aus expandierbarem, thermoplastischem Polyurethan (eTPU) ausgebildet. Das thermoplastische Polyurethan kann ein Polymer-Blend sein, der einen vorbestimmten Anteil an Polyurethan enthält. Ein solcher thermoplastischer Polymer-Blend ist aus der WO 2010/010010 A1 bekannt. Der Polymer-Blend enthält vorzugsweise einen Gewichtsanteil von zumindest 5% an Polyurethan und insbesondere vorzugsweise zumindest 50% an Polyurethan. Die Schaumstoffpartikel können auch aus einem Polymer-Blend mit einem Gewichtsanteil von zumindest 80% bzw. 90% Polyurethan ausgebildet sein. Auf die WO 2010/010010 A1 wird bezüglich der Ausbildung des Polymer-Blends vollinhaltlich Bezug genommen.

Die Schaumstoffpartikel können mit einem Treibmittel versehen sein. Geeignete Treibmittel sind bspw. Pentan, Butan oder CO₂ oder Gemische davon. Als Treibmittel können auch feste Treibmittel, wie Azolcarbonamid oder p-Toluolsulfonsäurehydracit, verwendet werden. Es können auch Schaumstoffpartikel verwendet werden, die keine Treibmittel aufweisen.

Weitere Aspekte der Erfindung, die in Kombination mit dem oben erläuterten Verfahren oder auch unabhängig von dem oben erläuterten Verfahren zum Verhindern eines Verklumpens bzw. einer Brückenbildung von Schaumstoffpartikeln während des Transportes zum Formwerkzeug verhindern, werden nachfolgend erläutert.

Um insbesondere eine derartige Brückenbildung zu vermeiden, kann der Schaumstoffpartikelschüttung ein Trenn- oder Gleitmittel zugeführt werden. Dies kann beispielsweise durch Einblasen von Gasen, insbesondere Luft, oder Gas-Festkörpermischungen, beispielsweise Feinstaub erfolgen. Dabei kann dieses Einbringen bereits im Füllbehälter oder unmittelbar in den Füllstrom bzw. in die Füllstrecke erfolgen.

Eine weitere Möglichkeit, eine unerwünschte Brückenbildung zu verhindern, besteht darin, dass ein Gleitzusatz in Form eines Wachses beigemengt wird. Auch hierbei kann dies sowohl im Silo als auch in der Füllstrecke erfolgen. Die Menge des beigegebenen Wachses beträgt vorzugsweise zwischen 0,05 und 0,5 Gewichts-% bezogen auf die Menge der Schaumstoffpartikel. Vorzugsweise wird das Wachs zusammen mit dem Wasserdampf den Schaumstoffpartikeln zugeführt

Nach einem weiteren Aspekt kann auch unerwünschte Brückenbildung vermieden oder können bereits gebildet Brücken aufgebrochen werden dadurch, dass die Füllstrecke zumindest abschnittsweise mechanisch bewegt, insbesondere gerüttelt oder mit Schwingungen beaufschlagt wird.

Darüber hinaus bietet auch die exakte Dosierung der Schaumstoffpartikel in den beschriebenen Förderstrom die Möglichkeit die Brückenbildung zu verhindern.
Dies geschieht bspw. dadurch, dass entweder die Partikel durch zwei gegenläufige Bürstenwalzen gekapselt unterhalb des Füllbehälters zum Dosieren vereinzelt werden. Eine andere Art der Vereinzelung der Partikel kann man durch die Anordnung einer ebenfalls gekapselten revolverartig rotierenden Trommel mit in Achsrichtung angeordneten Bohrungen zur Aufnahme der Partikel unterhalb des Füllbehälters in Kammern erreicht werden. Diese Kammern der Trommel können dann exakt befüllt werden, wobei dann nach einer erfolgten Drehung der Trommel der Inhalt der einzelnen Kammern nacheinander in den Förderstrom abgegeben wird. Neben der Vereinzelung kann dadurch auch eine volumenmäßige Dosierung der in die Kavität zu transportierenden Partikel erreicht werden.

Das Füllen kann bevorzugt als Gegendruckfüllverfahren ausgeführt sein, wobei sowohl ein Füllinjektor als auch ein Formraum des Formwerkzeuges druckbeaufschlagt sind. Durch die Einstellung eines Differenzdrucks kann dabei die Rohdichte des Formteils gesteuert werden.

Das Gegendruckfüllverfahren kann mit einer Konditionierung insbesondere nach Art einer Druckbeladung vor dem eigentlichen Füllvorgang verbunden sein.

Nach einem weiteren Ausführungsbeispiel der Erfindung werden die ETPU Partikel vor dem Druckfüllen vorzugsweise in einem separaten Behälter evakuiert. Dies führt zunächst zu einer Volumenvergrößerung der einzelnen Partikel, verbunden mit einer stärkeren Volumenreduzierung beim anschließenden Druckfüllen im Vergleich zum herkömmlichen Druckfüllen, wodurch ein leichteres Füllen ermöglicht wird.

Alternativ zur Druck- oder Gegendruckfüllung kann nach einem weiteren Ausführungsbeispiel der Erfindung die Form im Crack-Spalt-Verfahren gefüllt werden.

Die Verdichtung kann dabei über die gesamte Form gleichmäßig erfolgen. Nach einem weiteren bevorzugten Ausführungsbeispiel kann zumindest eine Formhälfte jedoch aus mehreren Sektionen bestehen, die getrennt voneinander betätigt, das heißt in Richtung auf die gegenüberliegende Formhälfte bewegt werden können. Dabei können die Verdichtungen in den unterschiedlichen Sektionen unabhängig voneinander eingestellt werden.

Als weiteres Füllverfahren kann eine Schneckenfüllung oder Plattenfüllung Anwendung finden. Dabei wird das Schaumstoffpartikelmaterial über einen Schneckenförderer bzw. Schneckenextruder oder einen Plattenextruder in die Form gefüllt, wobei die Schaumstoffpartikel zudem in Wasser als Trägermaterial dispergiert sein können.

Um insbesondere ein konstantes Gewicht des fertigen Formteils bei vollständiger und gleichmäßiger Füllung der Form zu erreichen, kann vor dem eigentlichen Füllvorgang vor oder in der Füllstrecke eine Vor- oder Zwischendosierung des Schaumstoffpartikelmaterials erfolgen. Dabei kann die diese Dosierung gravimetrisch, volumetrisch oder mit einem kombinierten Verfahren erfolgen. Nach einer besonders bevorzugten Ausführungsform erfolgt zunächst die gravimetrischen Bestimmung einer Sollmenge und danach eine Überprüfung, ob das Volumen der abgewogenen Sollmenge zwischen einem vorgegebenen Minimal- und einem ebenso vorgegebenen Maximalwert liegt. Dabei entspricht der Minimalwert der Menge, bei der die Form gerade noch vollständig gefüllt ist und der Maximalwert der Menge, die sich gerade noch in die Form füllen lässt.

Im Vergleich zu herkömmlichen aus Partikeln bestehenden schäumbaren Materialien weist ETPU eine wesentlich höhere Dichte auf. So liegt die Dichte bei ETPU regelmäßig im Bereich zwischen 120 bis 200 g/l, während die Dichte von beispielsweise EPS und EPP im Bereich zwischen 15 und 50 bzw. 20 bis 120 g/l liegt. Dies führt dazu, dass zum Aufschäumen bzw. zum Verschweißen der ETPU Partikel ein erheblich höherer Energie- bzw. Wärmeeintrag notwendig ist. Die Partikel können bereits vor oder während des Füllens mit insbesondere Wasserdampf vorgewärmt werden, wobei dies vorzugsweise mit beim Verarbeitungsprozess anfallender Abwärme erfolgt. Neben der Verringerung des Wärmebedarfs werden die Partikel auch weicher und lassen sich leichter komprimieren.

Um die Adhäsionskraft der Partikel gegenüber den Oberflächen der Fülleinrichtung, insbesondere des Füllrohrs, zu verringern und einen unerwünschten Abrieb der Partikel an diesen Oberflächen zu vermeiden, sind vorzugsweise diese Oberflächen glatt ausgebildet und bestehen aus einem oxidationsfreien oder zumindest oxidationsarmen Material oder einer solchen Beschichtung. So kann beispielsweise das Füllle itung aus einem Rohr aus Edelstahl bestehen und eine polierte Innenfläche aufweisen.

Die Füllstrecke bzw. Füllleitung wird nach einem weiteren Ausführungsbeispiel regelmäßig, insbesondere nach jedem Füllvorgang gereinigt, beispielsweise mit einem Reinigungsfluid gespült.

Wenn das Befüllen der Form durch Druckfüllen mit vergleichsweise hohem Fülldruck, das heißt regelmäßig einer Kombination aus Füllbehälterdruck, Fluidisierluftdruck und/oder Staudruck, erfolgt, sind die Volumina der Zwickel, die zur Durchleitung des Dampfes und damit zum Aufheizen der Partikel notwendig sind, stark reduziert. So kann beispielsweise bei einem Kompressionsgrad der ETPU Partikel von mehr als 150% kaum noch mit einem klassischen Querdampfverfahren gearbeitet werden, da der Wärmeeintrag nur noch stark reduziert durch Wärmeübertragung auf die zu den Zwickelvolumina weisenden Flächen der Partikel erfolgt, sondern hauptsächlich durch Wärmeleitung zwischen den Partikeln selbst. Dies führt zum Einen zu stark verlängerten Bedampfungszeiten und zum Anderen können verbrannte Oberflächen an den Stellen, an denen der Dampf in die Form eingeleitet wird, nicht ausgeschlossen werden. Das gleiche Problem kann auftreten, wenn im Crack-Spalt-Verfahren befüllt wird und beim Schließen der Form durch hohe Spaltmaße eine starke Kompression der Partikel erfolgt.

Um dieses Problem zumindest zu verringern erfolgt nach einer Auführungsform nach dem Füllen und Schließen der Form der Wärmeintrag nicht durch eine herkömmliche Querbedampfung von einer Seite, sondern es wird Querdampf von zwei gegenüberliegenden Seiten der Form in den Forminnenraum unter Bildung eines Staudrucks eingeleitet. Der Druck auf einer Fahr- und Festseite des Formwerkzeuges wird aktiv durch Öffnen der Dampfventile auf Fahr- und Festseite gleichzeitig aufgebaut. Dadurch werden die Partikel zunächst etwas komprimiert, sodass wieder Zwickel entstehen und die Partikelschüttung wieder dampfdurchlässig wird. Die nötige Durchströmung wird wie beim üblichen Querbedampfen durch unterschiedliche Drücke auf Fahr- und Festseite erzeugt. Über die Druckdifferenz und das Druckniveau werden Temperatur, Kompressionsgrad der Partikel und Dampffluss, das heißt der Energieeintrag in das Material, gesteuert. Das gleichzeitige Öffnen der Dampfventile auf Fahr-und Festseite ist zweckmäßig, da sonst der auf der Staudruckseite erforderliche Dampf aufgrund der Kondensation an kalten Werkzeugwänden und Volumenfüllung das Formteil durchströmt und schon die Oberfläche verschweißt, bevor die Partikel durch den Druckaufbau komprimiert sind, die gewünschten Zwickel also schon nicht mehr erzeugt werden können.

Damit die Querströmung nicht nur aufgrund von Kondensation entsteht, kann der Auslass auf der Seite mit dem niedrigeren Druck taktend auf einen noch etwas niedrigeren Druck (0,1 ... 0,3 bar) als der Einlassdruck dieser Seite geregelt bzw. geschlossen werden. Während der Auslass auf den niedrigen Druck geregelt wird, wird der Einlass geschlossen, damit der Dampf nicht innerhalb der Kammer von oben nach unten strömt, sondern von der zweiten Dampfkammer quer durch das Formteil.

Nach einer weiteren Ausführungsform der Erfindung kann die Einleitung des von beiden Seiten der Hauptebene des Formteils eingebrachten Querdampfs entweder auf beiden Seiten gleichzeitig oder aber zeitlich versetzt erfolgen. Besonders vorteilhaft kann es sein, wenn die Querbedampfung von beiden Seiten nach Art eines Ping-Pong-Effektes intermittierend erfolgen kann. Dies bedeutet insbesondere, dass die Dampfströmung ihre Richtung im Formteil mehrfach ändert. Dadurch kann eine besonders gute Spülung und eine besonders homogene Temperaturverteilung erreicht werden.

Eine weitere Homogenisierung der Temperaturverteilung kann erreicht werden, wenn nach einem weiteren Ausführungsbeispiel der Erfindung, der Dampf über mindestens einen nadelartigen Dampfinjektor unmittelbar in den Forminnenraum eingebracht wird. Dies kann insbesondere bei komplexen Formteilgeometrien von Vorteil sein, um an sonst schwer zugänglichen Stellen ausreichend Dampf zur Verfügung zu stellen.
Insbesondere wenn die Füllung im Crack-Spalt-Verfahren erfolgt, kann auch die Bedampfung über den Spalt erfolgen. Dabei kann die Verdichtung während des Bedampfens oder aber im autoklavischen Zustand, d.h. nach Abschluss der Bedampfung erfolgen, wobei zudem die Verdichtung wiederum sektional erfolgen kann.
Nach dem Abschluss des Bedampfungsvorgangs kann weiter in für sich bekannter Weise eine Abkühlung und eine Stabilisierung des Formteils erfolgen, bevor dieses nach dem Öffnen der Form aus dieser entnommen wird. Dabei kann insbesondere die Kühlung intervallartig erfolgen und Kühlung und/oder Stabilisierung können auch unter Vakuumunterstützung erfolgen.

Das Entformen kann in grundsätzlich bekannter Weise beispielsweise über Saugerplatten erfolgen, die durch Unterdruck einen Kraftschluss zu den Formzeilen herstellen. Es hat sich jedoch gezeigt, dass ETPU Formteile sehr fest in der Form sitzen können, so dass die durch Sauger aufgebrachte Kraft nicht zuverlässig ausreicht. Nach einem weiteren Ausführungsbeispiel der Erfindung ist daher vorgesehen, dass die Entformung über mechanische Greifer erfolgt oder Nadeln mit Spreizeffekt, die in dass fertige Formteil eindringen und sich dort lösbar verhaken.

Die Erfindung wird nachfolgend anhand der in den Zeichnungen dargestellten Ausführungsbeispiele beispielhaft näher erläutert. Die Zeichnungen zeigen in:
- Fig. 1: schematisch eine Vorrichtung zur Herstellung eines Partikelschaumstoffteils in einem Blockschaltbild, und
- Fig. 2: schematisch eine Vorrichtung zur Herstellung eines Partikelschaumstoffteils mit einer Gegendruckbefüllung eines Formwerkzeuges in einem Blockschaltbild.

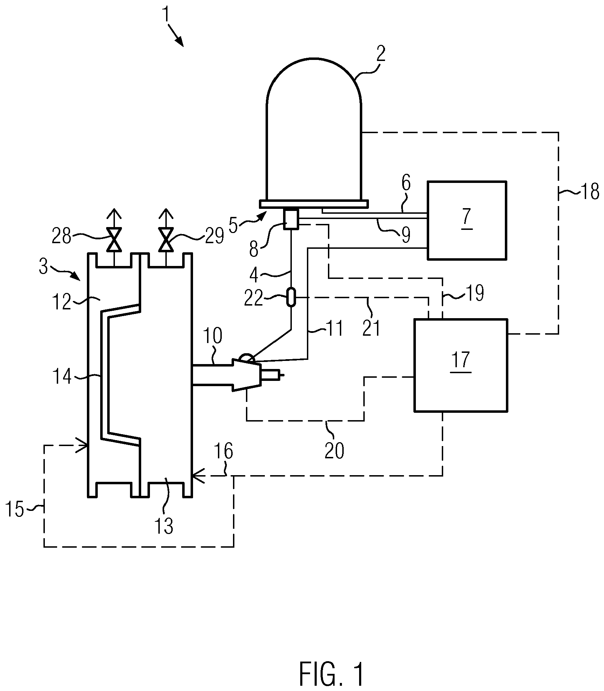

Ein erstes Ausführungsbeispiel einer erfindungsgemäßen Vorrichtung 1 zur Herstellung eines Partikelschaumstoffteils ist in Fig. 1 dargestellt.

Diese Vorrichtung 1 umfasst einen Materialbehälter 2, ein Formwerkzeug 3 und eine Leitung 4, die vom Materialbehälter 2 zum Formwerkzeug 3 führt.

Der Materialbehälter 2 dient zur Aufnahme loser Schaumstoffpartikel. Der Materialbehälter 2 weist einen Boden 5 auf, wobei er im Bodenbereich über eine Druckluftleitung 6 mit einer Druckluftquelle 7 verbunden ist. Die Druckluftleitung 6 ist mit mehreren im Boden 5 angeordneten Düsen (nicht dargestellt) verbunden, so dass in dem Materialbehälter 2 mehrere Luftströme eingeleitet werden können, die die darin befindlichen Schaumstoffpartikel verwirbeln und dadurch vereinzeln.

Im Bereich des Bodens 5 des Materialbehälters 2 ist die Förderleitung 4 an dem Materialbehälter 2 angeschlossen. Benachbart zum Materialbehälter 2 befindet sich in der Förderleitung 4 eine Treibdüse 8. Die Treibdüse 8 ist mit einer weiteren Druckluftleitung 9 mit der Druckluftquelle 7 verbunden. Die der Treibdüse 8 zugeführte Druckluft dient als Treibluft, da sie durch die Treibdüse 8 in die Förderleitung 4 eintritt und in Richtung zum Formwerkzeug 3 strömt. Hierdurch wird an der Treibdüse 8 an der zum Materialbehälter 2 weisenden Seite ein Unterdruck erzeugt, der aus dem Materialbehälter Schaumstoffpartikel ansaugt.

Die Förderleidung 4 mündet in einen Füllinjektor 10, der an das Formwerkzeug 3 gekoppelt ist. Der Füllinjektor 10 ist mit einer weiteren Druckluftleitung 11 mit der Druckluftquelle 7 verbunden. Die dem Füllinjektor 10 zugeführte Druckluft wird einerseits zum Füllen des Formwerkzeuges 3 verwendet, indem der Strom von Schaumstoffpartikeln mittels der Druckluft in Richtung zum Formwerkzeug 3 beaufschlagt wird. Andererseits kann die dem Füllinjektor 10 zugeführte Druckluft auch zum Zurückblasen der Schaumstoffpartikel aus der Förderleitung 4 in den Materialbehälter 2 verwendet werden, wenn der Füllvorgang am Formwerkzeug 3 abgeschlossen ist.

Das Formwerkzeug 3 ist aus zwei Formhälften 12, 13 ausgebildet. Zwischen den beiden Formhälften ist zumindest ein Formraum 14 begrenzt, in den der Füllinjektor 10 zum Einbringen der Schaumstoffpartikel mündet. Das Volumen des Formraums 14 kann durch Zusammenfahren der beiden Formhälften 12, 13 verringert werden. Bei auseinandergefahrenen Formhälften 12, 13 ist ein Spalt zwischen den Formhälften 12, 13 ausgebildet, der als Crack-Spalt bezeichnet wird. Deshalb wird ein solches Formwerkzeug 3 auch als Crack-Spalt-Formwerkzeug bezeichnet. Die beiden Formhälften 12, 13 weisen Ventile 28, 29 auf, welchen von einer Steuereinrichtung (nicht dargestellt) betätigbar sind. Die Ventile 28, 29 sind in einer kommunizierenden Verbindung zwischen dem Formraum 14 und der Umgebung angeordnet, so dass Gas gesteuert aus dem Formraum 14 gesteuert entweichen kann.

Das Formwerkzeug kann auch mehrere Formräume aufweisen, die möglichst unabhängig voneinander bzgl. Füllung, Verdichtung und/oder Erhitzung ansteuerbar sind.

Die beiden Formhälften 12, 13 sind über Dampfleitungen 15, 16 mit einem Dampfgenerator 17 verbunden, um in den Formraum 14 Dampf zum Verschweißen der darin eingebrachten Schaumstoffpartikel zuzuführen.

Der Dampfgenerator 17 ist mit einer Dampfleitung 18 mit dem Materialbehälter 2 verbunden, um diesem Wasserdampf zuzuführen. Eine weitere Dampfleitung 19 führt vom Dampfgenerator 17 zur Treibdüse 8, so dass dem Strom von Schaumstoffpartikeln Wasserdampf zugeführt werden kann.

Mit einer Dampfleitung 20 ist der Dampfgenerator 17 mit dem Füllinjektor 10 verbunden, so dass dem durch den Füllinjektor 10 strömenden Strom an Schaumstoffpartikeln Wasserdampf zugeführt werden kann.

Es ist eine Dampfleitung 21 vorgesehen, die vom Dampfgenerator 17 zur Förderleitung 4 führt, wobei an einer entsprechenden Anschlussstelle 22 in der Förderleitung 4 eine Injektionsdüse (nicht dargestellt) vorgesehen ist, um Wasserdampf in die Förderleitung 4 einzubringen.

In den Dampfleitungen und Druckluftleitungen sind pneumatisch oder elektrisch ansteuerbare Ventile (nicht dargestellt) vorgesehen, so dass die zugeführte Druckluftmenge oder zugeführte Dampfmenge von einer Steuereinrichtung (nicht dargestellt) exakt gesteuert werden kann.

### Nachfolgend wir die Funktionsweise der in Fig. 1 gezeigten Vorrichtung 1 erläutert:

Zum Befüllen des Formwerkzeuges wird über die Druckluftleitung 6 im Bereich des Bodens 5 des Materialbehälters 2 Luft eingeblasen, um die darin befindlichen Schaumstoffpartikel zu verwirbeln und zu vereinzeln. Gleichzeitig wird der Treibdüse 8 Treibluft zugeführt, so dass aus dem Materialbehälter 2 Schaumstoffpartikel in die Förderleitung 4 gesaugt und mit der Treibluft in Richtung zum Formwerkzeug 3 transportiert werden. Während des Befüllens sind die Ventile 28, 29 geöffnet, so dass Luft entweichen kann.

Über die Dampfleitung 18 wird vom Dampfgenerator 17 dem Materialbehälter 2 Wasserdampf zugeführt. Der Wasserdampf ist trockener Sattdampf, der mit dem im Materialbehälter 2 befindlichen Druck (ca. 1 bar) dem Materialbehälter 2 zugeführt wird. Vorzugsweise wird der Wasserdampf im Materialbehälter 2 benachbart zur Anschlussstelle der Förderleitung 4 in den Materialbehälter 2 eingedüst, so dass die in die Förderleitung 4 gesaugten Schaumstoffpartikel vom Wasserdampf benetzt werden.

Eine weitere Zufuhr von Wasserdampf zu dem Strom von Schaumstoffpartikeln erfolgt an der Treibdüse 8, an der Anschlussstelle 22 und am Füllinjektor 10.

Die Temperatur des trockenen Sattdampfes ist durch die Siedepunktkurve vom Wasserdampf festgelegt und somit durch den vorliegenden Druck vorgegeben. Bei einem Druck von etwa 1 bar in der Förderleitung 4 beträgt die Temperatur des Sattdampfes etwa 100°C.

Die Menge des Wasserdampfes muss so bemessen sein, dass die Schaumstoffpartikel an ihren Oberflächen nicht aktiviert werden und nicht in der Förderleitung 4 miteinander verschweißen. Bei Schaumstoffpartikeln auf Basis von Polyurethan liegt die Temperatur zum Verschweißen derselben bei etwa 80°C bis 130°C, wobei dies von der jeweils verwendeten Materialzusammensetzung abhängt. Die Menge des Wasserdampfes muss somit derart bemessen sein, dass die Schaumstoffpartikel nicht entlang des Transportweges vom Materialbehälter 2 zum Formwerkzeug 3 eine Temperatur von 90°C oder mehr erreichen.

Kommt der Wasserdampf mit den Schaumstoffpartikeln in Kontakt, dann kondensiert der Wasserdampf an der Oberfläche der Schaumstoffpartikel, da diese kälter sind und bildet einen dünnen Flüssigkeitsfilm. Dieser Flüssigkeitsfilm vermindert die Adhäsionskräfte zwischen den Schaumstoffpartikeln und erhöht deren Gleitfähigkeit. Hierdurch wird die Gefahr des Zusammenhaftens bzw. Verklumpens von Schaumstoffpartikeln erheblich reduziert und ein zuverlässiger Transport derselben durch die Förderleitung 4 sichergestellt.

Durch das Zuführen von Wasserdampf an mehreren Stellen entlang des Transportweges kann einerseits die lokale Wärmezufuhr an die jeweilige Zufuhrstelle von Wasserdampf ausreichend gering gehalten werden, um ein Aktivieren der Schaumstoffpartikel zu vermeiden, und andererseits sichergestellt werden, dass entlang des gesamten Transportweges die Schaumstoffpartikel ausreichend mit Feuchtigkeit benetzt sind. Hierdurch können die Schaumstoffpartikel zuverlässig dem Formraum 14 des Formwerkzeuges 3 zugeführt werden.

Nach dem Befüllen des Formraumes 14 mit Schaumstoffpartikeln werden der Füllinjektor 10 und die Ventile 28, 29 geschlossen. Die dem Füllinjektor 10 zugeführte Druckluft wird zum Zurückblasen der in der Förderleitung 4 befindlichen Schaumstoffpartikel in den Materialbehälter 2 verwendet. Während des Rückblasens wird vorzugsweise ein Fuidisierstrom dem Materialbehälter 2 zugeführt. Hierdurch wurde eine deutliche Reduzierung von Verstopfungen im Transportweg erzielt.

Durch Zusammenfahren der beiden Formhälften 12, 13 wird das Volumen des Formraums 14 verringert und werden die darin befindlichen Schaumstoffpartikel verdichtet.

Danach wird dem Formraum 14 Wasserdampf, insbesondere trockenem Heiß- oder Sattdampf, über die Leitung 15, 16 zugeführt, um die darin befindlichen Schaumstoffpartikel miteinander zu verschweißen. Die Zuführung von Wasserdampf kann auch bereits während des Zusammenfahrens und Verdichtens der Schaumstoffpartikel erfolgen. Das Zuführen von Wasserdampf erfolgt vorzugsweise zunächst bei geöffnetem Formraum (Crack-Spalt oder geöffnetes Ventil), so dass die in den Zwickelräumen befindliche Luft verdrängt und vollständig durch Wasserdampf ersetzt wird. Beim Spaltbedampfen wird das Material je nach Einstellung bereits teilweise bis vollständig verschweißt. Beim Spaltbedampfen wird vorzugsweise ein abgedichtetes, teleskopartig zusammenfahrendes Crackspaltwerkzeug verwendet. Wasserdampf leitet Wärme wesentlich besser als Luft, so dass dies zu einem schnelleren und gleichmäßigeren Verschweißen der Schaumstoffpartikel führt.

Das Zuführen des Wasserdampfes in den Formraum 14 erfolgt vorzugsweise durch eine Querbedampfung von zumindest einer Seite. Insbesondere wird der Querdampf von zwei gegenüberliegenden Seiten dem Formraum 14 unter Bildung eines Staudrucks eingeleitet. Der Druck auf einer Fahr-und Festseite des Formwerkzeuges wird aktiv durch Öffnen der Dampfventile auf Fahr- und Festseite gleichzeitig aufgebaut. Dadurch werden die Partikel zunächst etwas komprimiert, sodass Zwickel entstehen und die Partikelschüttung dampfdurchlässig wird. Die nötige Durchströmung wird wie beim üblichen Querbedampfen durch unterschiedliche Drücke auf Fahr- und Festseite erzeugt. Über die Druckdifferenz und das Druckniveau werden Temperatur, Kompressionsgrad der Partikel und Dampffluss, das heißt der Energieeintrag in das Material, gesteuert. Vorzugsweise werden die Dampfventile auf Fahr-und Festseite zumindest zeitweise gleichzeitig geöffnet, da sonst der auf der Staudruckseite erforderliche Dampf aufgrund der Kondensation an kalten Werkzeugwänden und Volumenfüllung das Formteil durchströmt und schon die Oberfläche verschweißt, bevor die Partikel durch den Druckaufbau komprimiert sind und die gewünschten Zwickel nicht mehr erzeugt werden können.

Als weitere vorteilhafte Bedampfungsvariante hat sich das Bedampfen mit Unterdruck (< 0,5 bar Absolutdruck) im Formwerkzeug herausgestellt. Dazu wird vor dem ersten Bedampfungsschritt der Unterdruck im Formwerkzeug aufgebaut und anschließend ein Querdampfschritt ausgeführt. Die reduzierte Luftmenge zwischen den Partikeln sorgt für einen guten Wärmeübergang. Durch das zusätzliche Druckgefälle von ca. 0,5 bar kann auch schon mechanisch komprimiertes eTPU (z.B. durch Crackspaltfüllen oder Gegendruckfüllen) vom Dampf durchströmt und verschweißt werden. Außerdem bleibt die Dampftemperatur ausreichend niedrig, sodass die Außenhaut des Formteils nicht vorzeitig gasdicht verschweißt wird, bevor die Innenbereiche verschweißt sind.

Bei einer hohen Verdichtung der Schaumstoffpartikel im Formwerkzeug kann es auch zweckmäßig sein, während des Bedampfens zumindest an einer Seite des Formwerkzeuges einen Unterdruck anzulegen. Vorzugsweise wird der Unterdruck an der Seite angelegt, die der Seite gegenüberliegt, an welcher der Wasserdampf dem Formwerkzeug zugeführt wird.

Nach dem Verschweißen der Schaumstoffpartikel zu einem Partikelschaumstoffteil wird die Zuführung von Wasserdampf abgestellt, das Formwerkzeug abgekühlt und zur Entnahme des Partikelschaumstoffteils geöffnet.

Danach beginnt das Verfahren erneut mit dem Befüllen des Formraumes 14 mit Schaumstoffpartikel.

Das oben erläuterte Ausführungsbeispiel weist vier Stellen auf, an welchen Wasserdampf den Schaumstoffpartikeln hinzugegeben wird. Dies sind der Materialbehälter 2, die Treibdüse 8, die Anschlussstelle 22 und der Füllinjektor 10. Im Rahmen der Erfindung ist es selbstverständlich auch möglich, die Anzahl und den Ort der Stellen, an welchen entlang dem Transportweg der Schaumstoffpartikel Wasserdampf zugegeben wird, zu variieren. Dies hängt vor allem von den individuellen Transportparametern (Durchmesser der Förderleitung 4, chemische Zusammensetzung der Schaumstoffpartikel, Fördergeschwindigkeit, Druck des Treibgases, Anzahl der Kurven von Engstellen in der Förderleitung 4, etc.) ab. So kann es zweckmäßig sein, lediglich an einer einzigen Stelle, insbesondere dem Materialbehälter 2 oder an der Treibdüse 8 Wasserdampf zuzugeben. Andererseits kann es auch zweckmäßig sein, mehrere Anschlussstellen an der Förderleitung 4 vorzusehen, an welchen jeweils eine Dampfleitung angeschlossen ist.

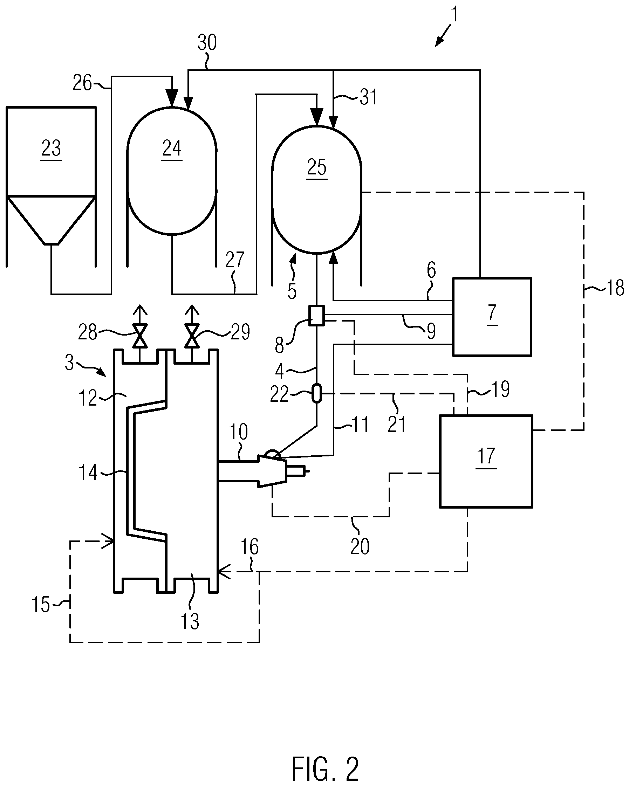

Fig. 2 zeigt ein zweites Ausführungsbeispiel einer Vorrichtung 1 zur Herstellung eines Partikelschaumstoffteils. Gleiche Teile wie im ersten Ausführungsbeispiel sind mit gleichen Bezugszeichen versehen und werden nicht nochmals im Detail erläutert.

Diese Vorrichtung weist einen Silobehälter 23 zum Lagern der Schaumstoffpartikel, einen Konditionierdruckbehälter 24 und einen Zwischenspeicherdruckbehälter 25 auf. Zwischen dem Silobehälter 23 und dem Konditionierdruckbehälter 24 ist eine erste Transportleitung 26 zum Befördern der Schaumstoffpartikel aus dem Silobehälter 23 in den Konditionierdruckbehälter 24 angeordnet. Eine zweite Transportleitung 27 führt vom Konditionierdruckbehälter 24 zum Zwischenspeicherdruckbehälter 25, um im Konditionierdruckbehälter konditionierte Schaumstoffpartikel vom Konditionierdruckbehälter 24 zum Zwischenspeicherdruckbehälter 25 zu befördern. Vom Zwischenspeicherdruckbehälter 25 führt eine Förderleitung 4 zu einem Formwerkzeug 3. Der Zwischenspeicherdruckbehälter 25 fungiert somit als Materialbehälter, aus dem die Schaumstoffpartikel mittels der Förderleitung 4 abgefördert werden.

In der Förderleitung 4 sind wiederum eine Treibdüse 8, eine Anschlussstelle 22 und ein Füllinjektor 10 vorgesehen und genauso wie beim ersten Ausführungsbeispiel ausgebildet und angeordnet. Das Formwerkzeug 3 besteht wiederum aus zwei Formhälften 12, 13, wobei das Formwerkzeug 3 nicht notwendigerweise ein Crack-Spalt-Formwerkzeug sein muss. Vorzugsweise ist es als Formwerkzeug mit einem statischen Formraum 14 ausgebildet, dessen Volumen im geschlossenen Zustand des Formwerkzeuges nicht veränderbar ist. Die beiden Formhälften 12, 13 weisen jeweils Ventile 28, 29 auf, die zum Druckbefüllen als Druckventile 28, 29 ausgebildet sind, welche den Druck im Formraum 14 auf einen bestimmten Wert begrenzen, d.h., dass Gas aus den Druckventilen 28, 29 austritt, wenn im Formraum ein bestimmter Druck überschritten wird. Ein solches Formwerkzeug erlaubt das Befüllen des Formraums 14 mit einem Gegendruck, wie es unten näher erläutert wird.

Die Vorrichtung 1 weist wiederum einen Dampfgenerator 17 auf, der genauso wie beim ersten Ausführungsbeispiel mittels Dampfleitungen 15, 16, 18-21 mit dem Formwerkzeug 3 bzw. dem Zwischenspeicherdruckbehälter 25, der Treibdüse 8, der Anschlussstelle 22 und dem Füllinjektor 10 verbunden ist.

Weiterhin ist eine Druckluftquelle 7 vorgesehen, welche mittels einer Druckluftleitungen 6 dem Zwischenspeicherdruckbehälter 25 Druckluft zum Verwirbeln der Schaumstoffpartikel, einer Druckluftleitung 9 der Treibdüse 8 Treibluft und einer Druckluftleitung 11 dem Füllinjektor 10 Treib- bzw. Füllluft zuführen.

Weiterhin sind der Konditionierdruckbehälter 24 und der Zwischenspeicherdruckbehälter 25 über Druckluftleitungen 30, 31 mit der Druckluftquelle 7 verbunden, um in den beiden Behältern 24, 25 jeweils einen vorbestimmten Druck einzustellen.

### Nachfolgend wird die Funktionsweise der Vorrichtung 1 zur Herstellung eines Partikelschaumstoffteils erläutert:

Die Schaumstoffpartikel werden im Silobehälter 23 vorgehalten. Vom Silobehälter 23 werden die Schaumstoffpartikel über die erste Transportleitung 26 zum Konditionierdruckbehälter 24 befördert. Im Konditionierdruckbehälter 24 werden die Schaumstoffpartikel unter Druck gesetzt, wobei der endgültige Druck etwa 2-5 bar beträgt. Hier wird der Druck über einen Zeitraum von beispielsweise 2-6 Stunden allmählich erhöht und dann über einen Zeitraum von 2-24 Stunden gehalten. Durch einen langsamen Druckaufbau im Konditionierbehälter diffundiert Luft/Gas in die Schaumstoffpartikel. Der Druckanstieg wird so klein gewählt, dass die Schaumstoffpartikel nicht so schnell bzw. so stark komprimiert werden, dass sie eine "rosinenähnliche" faltige Oberfläche erhalten und schlecht zu befördern sind. Mit der Konditionierung wird ein Innendruck in den Partikeln aufgebaut, der später beim Verschweißen im Werkzeug wie ein Treibmittel wirkt und die Schaumstoffpartikel aufbläht. Durch das Konditionieren können die Schaumstoffpartikel auf ein kleiner Volumen zusammengedrückt werden. Durch die allmähliche Druckerhöhung und durch das Halten des Druckes über einen längeren Zeitraum nehmen die Schaumstoffpartikel im zusammengedrückten bzw. konditionieren Zustand eine glatte Oberfläche ein.

Die konditionierten Schaumstoffpartikel werden in den Zwischenspeicherdruckbehälter 25 über die zweite Transportleitung 27 befördert. Am Boden 5 des Zwischenspeicherdruckbehälters 25 ist die Förderleitung 4 angeschlossen. Benachbart zu dieser Anschlussstelle sind Düsen vorgesehen, welche über die Druckluftleitung 6 mit Druckluft beaufschlagt werden, um mehrere Druckluftströme im Zwischenspeicherdruckbehälter 25 vorzusehen. Hierdurch werden die konditionierten Schaumstoffpartikel verwirbelt und vereinzelt.

Aus dem Zwischenspeicherdruckbehälter 25 werden die konditionierten Schaumstoffpartikel genauso wie beim ersten Ausführungsbeispiel über die Förderleitung 4 abgefördert und dem Formwerkzeug 3 zugeführt. Hierbei wird genauso wie beim ersten Ausführungsbeispiel an der Treibdüse 8 und am Füllinjektor 10 Treibluft zugeführt.

Ähnlich wie beim ersten Ausführungsbeispiel werden den konditionierten Schaumstoffpartikeln im Zwischenspeicherdruckbehälter 25 an der Treibluftdüse 8, an der Anschlussstelle 22 und an dem Füllinjektor 10 Wasserdampf zugegeben.

Das zweite Ausführungsbeispiel unterscheidet sich vom ersten Ausführungsbeispiel dahingehend, dass der Formraum 14 des Formwerkzeuges 3 während des Befüllens mit Schaumstoffpartikeln bereits seine endgültige Form bzw. sein endgültiges Volumen eingenommen hat. Weiterhin unterscheidet sich das zweite Ausführungsbeispiel vom ersten Ausführungsbeispiel dadurch, dass die Druckventile 28, 29 nur Luft bzw. Gas aus dem Formraum 14 entweichen lassen, wenn es einen Druck aufweist, der über einen vorbestimmten Schwellendruck liegt. Dieser Schwellendruck ist vorzugsweise so eingestellt, dass er etwa 0,2 bar bis 2 bar geringer als der Druck im Zwischenspeicherdruckbehälter 25 ist. Insbesondere ist dieser Schwellendruck etwa 0,5 bis 1 bar geringer als der Druck im Zwischenspeicherdruckbehälter 25. Hierdurch wird ein Druckgefälle zwischen dem Zwischendruckspeicherbehälter 25 und dem Formraum 14 des Formwerkzeuges 3 erzeugt und exakt festgelegt und es liegt ein Druckabfall entlang der Förderleitung 4 vor, der den Transport der Schaumstoffpartikel bewirkt. Der Druck im Zwischenspeicherdruckbehälter 25 liegt vorzugsweise im Bereich von 3 bis 5 bar. Daher ergibt sich in der Förderleitung 4 ein Druck von etwa 1,5 bis 4,5 bar. Der Druck in der Druckleitung hängt zum einen vom Ort in der Druckleitung ab. Je weiter entfernt ein Abschnitt der Druckleitung vom Zwischenspeicherdruckbehälter 25 ist, desto geringer ist der Druck. Zum anderen hängt der Druck in der Druckleitung von dem im Zwischenspeicherdruckbehälter 25 eingestellten Druck ab.

Da die Schaumstoffpartikel unter Druck befördert werden, behalten sie ihre kleine, zusammengedrückte Form bzw. ihr kleines Volumen. Dies führt dazu, dass die Anzahl der Zusammenstöße der Schaumstoffpartikel während des Transportes in der Förderleitung 4 geringer als bei einer im Wesentlichen druckfreien Förderung der gleichen Anzahl von Schaumstoffpartikeln pro Zeiteinheit ist. Da die Anzahl der Zusammenstöße durch diese Art der Druckbefüllung, die auch als Gegendruckbefüllung bezeichnet wird, reduziert wird, wird die Gefahr eines Verklumpens oder Zusammenklebens mehrerer Schaumstoffpartikel reduziert. Je höher der Druck in der Förderleitung 4 ist, desto geringer ist die Gefahr, dass die konditionierten Schaumstoffpartikel miteinander verklumpen und den Transportweg in den Formraum 14 verstopfen.

Ist der Formraum 14 vollständig mit Schaumstoffpartikeln gefüllt, dann wird der Füllinjektor 10 geschlossen. Die in der Förderleitung 4 befindlichen Schaumstoffpartikel werden genauso wie beim ersten Ausführungsbeispiel zurück in den Zwischenspeicherdruckbehälter 25 gefördert.

Die Druckventile 28, 29 oder weitere Ventile (nicht dargestellt in Fig. 2) werden geöffnet, so dass der Druck im Formraum 14 auf den Umgebungsdruck abfällt. Hierdurch expandieren die unter Druck stehenden Schaumstoffpartikel und dehnen sich aus. Dies bewirkt eine gleichmäßige Verdichtung der Schaumstoffpartikel im Formraum 14. Gleichzeitig oder danach kann dann der Formraum 14 mit Wasserdampf beaufschlagt werden, um die Schaumstoffpartikel zu einem Partikelschaumstoffteil zusammenzuschweißen.

Da die einzelnen Schaumstoffpartikel bereits während des Transports durch die Förderleitung 4 durch die Zugabe des Wasserdampfes vorerwärmt worden sind, kann die notwendige Zeit zum Verschweißen des Partikelschaumstoffteils im Vergleich zu herkömmlichen Vorrichtungen verringert werden. Hierdurch verkürzt sich die Taktzeit der gesamten Vorrichtung erheblich.

Auch bei dem zweiten Ausführungsbeispiel werden die Schaumstoffpartikel zunächst vereinzelt, mit Wasserdampf versetzt, um die Haftung zu verringern und um deren Gleitfähigkeit zu verbessern. Im Vergleich zum ersten Ausführungsbeispiel werden sie zusätzlich unter Druck zum Formwerkzeug 3 gefördert, so dass während des Transportes die Größe der Schaumstoffpartikel klein gehalten wird.

Der Wasserdampf ist an den einzelnen Stellen entlang dem Transportweg jeweils mit dem Druck zuzuführen, der an dem jeweiligen Abschnitt im Zwischenspeicherdruckbehälter 25 bzw. im Transportweg besteht. Da der Wasserdampf ein trockener Sattdampf ist, ist die Temperatur des Wasserdampfes entsprechend dem durch die Siedepunktkurve vom Wasserdampf vorgegebenen Druck einzustellen. Die Temperatur des Wasserdampfes liegt etwa im Bereich von etwa 115 bis 140°C. Aufgrund der hohen Temperatur des Wasserdampfes ist die Menge des zuzuführenden Wasserdampfes exakt zu dosieren, damit die Schaumstoffpartikel nicht im Zwischenspeicherdruckbehälter oder entlang dem Transportweg aktiviert werden und miteinander verschweißen. Daher ist es vorteilhaft, wenn der Wasserdampf an mehreren Stellen entlang dem Transportweg den konditionierten Schaumstoffpartikeln hinzugegeben wird.

Bei einem kurzen Transportweg und/oder bei Transportleitungen mit großem Durchmesser und/oder wenigen Kurven bzw. Engstellen kann selbstverständlich die Zugabe des Wasserdampfes lediglich an einer einzigen Stelle genügen.

Nach dem Verschweißen der Schaumstoffpartikel zum Partikelschaumstoffteil wird das Formwerkzeug 3 abgekühlt, und werden die beiden Formhälften 12, 13 zur Freigabe des Partikelschaumstoffteils getrennt.

Bei dem oben erläuterten Ausführungsbeispiel wird ein Formwerkzeug 3 mit statischem Formraum 14 verwendet, dessen Volumen während des Befüllens mit Schaumstoffpartikeln und des Verschweißens derselben zu einem Partikelschaumstoffteil nicht verändert wird. Im Rahmen der Erfindung ist es auch möglich, ein Crack-Spalt-Formwerkzeug zu verwenden, dessen Formraum ein variables Volumen aufweist. Zur Erzeugung eines Gegendruckes sind die Formhälften dieses Formwerkzeuges vorzugsweise abgedichtet. Da der Formraum mit konditionierten Schaumstoffpartikeln gefüllt wird, ist es nicht notwendigdie beiden Formhälften 13, 14 über einen langen Weg zusammen zu fahren, da aufgrund der Druckbefüllung bereits eine hohe Dichte an Schaumstoffpartikel im Formraum enthalten ist.

Da bei dieser Vorrichtung die Gefahr des Verklumpens der Schaumstoffpartikel und Verstopfen der Förderleitung gering ist, können zuverlässig Partikelschaumstoffteil aus Schaumstoffpartikeln auf Basis von Polyurethan hergestellt werden. Der Ausschuss ist gering, die Taktrate der Vorrichtung ist hoch. Dadurch können Partikelschaumstoffteil aus Schaumstoffpartikeln auf Basis von Polyurethan kostengünstig als Massenprodukt hergestellt werden.

### Bezugszeichenliste

- 1: Vorrichtung
- 2: Materialbehälter
- 3: Formwerkzeug
- 4: Förderleidung
- 5: Boden
- 6: Druckluftleitung
- 7: Druckluftquelle
- 8: Treibdüse
- 9: Druckluftleitung
- 10: Füllinjektor
- 11: Druckluftleitung
- 12: Formhälfte
- 13: Formhälfte
- 14: Formraum
- 15: Dampfleitung
- 16: Dampfleitung
- 17: Dampfgenerator
- 18: Dampfleitung
- 19: Dampfleitung
- 20: Dampfleitung
- 21: Dampfleitung
- 22: Anschlussstelle
- 23: Silobehälter
- 24: Konditionierdruckbehälter
- 25: Zwischenspeicherdruckbehälter
- 26: erste Transportleitung
- 27: zweite Transportleitung
- 28: Druckventil
- 29: Druckventil
- 30: Luftdruckleitung
- 31: Luftdruckleitung

## Patentansprüche

1. Verfahren zur Herstellung eines Partikelschaumstoffteils, umfassend folgende Schritte
- Zuführen von Schaumstoffpartikeln von einem Materialbehälter mittels einer Förderleitung (4) zu einem Füllinjektor (10), der an ein Formwerkzeug (3) gekoppelt ist, wobei die Schaumstoffpartikel mit einem Treibgas in der Förderleitung (4) befördert werden,
- thermoplastisches Verschweißen der Schaumstoffpartikel im Formwerkzeug (3) zum Partikelschaumstoffteil unter Zuführung von Wärme,
wobei den zuzuführenden Schaumstoffpartikeln Wasserdampf hinzugegeben wird, um diese während ihres Transports vom Materialbehälter zum Formwerkzeug zu benetzen, wobei der Wasserdampf mittels einer Injektionsdüse in die Förderleitung (4) und/oder an einer in Transportrichtung dem Materialbehälter (2) nachgeordneten Treibdüse (8) eingebracht wird.

2. Verfahren nach Anspruch 1,
**dadurch gekennzeichnet,**
**dass** die Schaumstoffpartikel von dem Materialbehälter (2) entlang eines Transportweges dem Formwerkzeug (3) zugeführt werden, wobei an mehreren Stellen entlang des Transportweges den Schaumstoffpartikeln Wasserdampf hinzugegeben wird.

3. Verfahren nach Anspruch 1 oder 2,
**dadurch gekennzeichnet,**
**dass** der Wasserdampf den Schaumstoffpartikeln zusätzlich im Materialbehälter (2), und/oder an einem Abschnitt der Förderleitung (4), insbesondere im Bereich vor einer Kurve und/oder Engstelle zugegeben wird.

4. Verfahren nach einem der Ansprüche 1 bis 3,
**dadurch gekennzeichnet,**
**dass** Wasserdampf zum Transportieren mit einer Temperatur von 100 bis 140 °C und/oder mit einem Druck von 1 bis 5 bar zugegeben wird.

5. Verfahren nach einem der Ansprüche 1 bis 4,
**dadurch gekennzeichnet,**
**dass** die Schaumstoffpartikel unter Druckerhöhung konditioniert werden und die konditionierten Schaumstoffpartikel dem Materialbehälter zugegeben und dort unter einem vorbestimmten Druck vorgehalten werden, der vorzugsweise im Bereich von 2 bis 5 bar liegt.

6. Verfahren nach Anspruch 5,
**dadurch gekennzeichnet,**
**dass** der Druck in der Leitung und im Formwerkzeug derart eingestellt wird, dass er während des Zuführens von Schaumstoffpartikeln in das Formwerkzeug etwas geringer als im Materialbehälter ist, und insbesondere im Formwerkzeug etwa 0,2 bis 2 bar und insbesondere etwa 0,2 bis 1 bar geringer als im Materialbehälter ist.

7. Verfahren nach einem der Ansprüche 1 bis 6,
**dadurch gekennzeichnet,**
**dass** die Schaumstoffpartikel im Materialbehälter (2) vereinzelt werden, wobei die Vereinzelung vorzugsweise durch Zuführen eines Gas- bzw. Luft- und/oder Dampfstroms erfolgt.

8. Verfahren nach einem der Ansprüche 1 bis 7,
**dadurch gekennzeichnet,**
**dass** Schaumstoffpartikel verwendet werden, die aus expandierbaren thermoplastischem Polyurethan (eTPU) ausgebildet sind.

9. Verfahren nach einem der Ansprüche 1 bis 8,
**dadurch gekennzeichnet,**
**dass** die Schaumstoffpartikel ein Treibmittel, wie z.B. Pentan, Butan oder CO2 oder ein Gemisch aus diesen Gasen enthalten.

10. Verfahren nach einem der Ansprüche 1 bis 9,
**dadurch gekennzeichnet,**
**dass** Schaumstoffpartikel verwendet werden, die mit einem Gleitmittel beschichtet sind, oder dass die Schaumstoffpartikel vor dem Zuführen zum Formwerkzeug (3) mit einem Gleitmittel beschichtet werden.

11. Verfahren nach einem der Ansprüche 1 bis 10,
**dadurch gekennzeichnet,**
**dass** die Förderleitung (4) und/oder das Formwerkzeugs (3) während des Befüllens bewegt wird.

12. Verfahren nach einem der Ansprüche 1 bis 11,
**dadurch gekennzeichnet,**
**dass** Pulver oder Staub als Gleitmittel zu den zu transportierenden Schaumstoffpartikeln eingeblasen wird.

13. Verfahren nach einem der Ansprüche 1 bis 12,
**dadurch gekennzeichnet,**
**dass** als Treibgas Luft oder ein Inertgas verwendet wird.

14. Vorrichtung zur Herstellung eines Partikelschaumstoffteils, umfassend
- einen Materialbehälter (2, 25),
- eine Förderleitung (4), die an den Materialbehälter (2, 25) angeschlossen ist um aus diesen Schaumstoffpartikel abzufördern,
- eine Druckluftleitung (9) zum Zuführen von Treibluft zum Befördern der Schaumstoffpartikel entlang der Förderleitung (4),
- ein Formwerkzeug (3) mit einem Formraum (14), an das die Förderleitung (4) mittels eines Füllinjektors (10) angeschlossen ist, so dass Schaumstoffpartikel aus dem Materialbehälter entlang eines Transportweges zum Formwerkzeug gefördert werden können,
- einen Dampfgenerator (17) zum Zuführen von Wasserdampf in den Formraum (14) zum thermoplastischen Verschweißen der Schaumstoffpartikel im Formraum (14) zu einem Partikelschaumstoffteil, **dadurch gekennzeichnet,**
**dass** der Dampfgenerator (17) mit zumindest einer Dampfleitung (18, 19, 20, 21) an einer in Transportrichtung dem Materialbehälter (2) nachgeordneten Treibdüse (8) und/oder an einem oder mehreren Abschnitten der Förderleitung (4) angeschlossen ist, um die dem Formwerkzeug zuzuführenden Schaumstoffpartikel mit Wasserdampf zu beaufschlagen.

15. Vorrichtung nach Anspruch 14,
**dadurch gekennzeichnet, dass**
eine Steuereinrichtung vorgesehen ist, welche die Vorrichtung zum Ausführen des Verfahrens nach einem der Ansprüche 1 bis 13 steuert.

## Claims

1. Method of producing a foam particle part, comprising the following steps:
- feeding of foam particles from a material container by means of a pipe (4) to a filling injector (10), which is coupled to a mould (3), wherein the foam particles are conveyed in the pipe (4) by means of a blowing gas,
- thermoplastic welding of the foam particles in the mould (3) to make a foam particle part with the input of heat,
wherein steam is added to the foam particles to be fed, so as to humidify the same during their transport from the material container to the mould, during which steam is brought into the pipe (4) by means of an injector nozzle and / or a propulsion nozzle (8) located downstream the material container (2) in the transport direction.

2. Method according to claim 1.
**characterised in that**
the foam particles are fed from the material container (2) to the mould along a conveyance path, wherein steam is added to the foam particles at several points along the conveyance path.

3. Method according to claim 1 or 2,
**characterised in that**
the steam is added in addition to the foam particles in the material container, and / or at an area of the pipe (4), in particular at an area preceding a curve and / or a constriction.

4. Method according to any of claims 1 to 3,
**characterised in that**
steam for conveyance is added at a temperature of 100 to 140°C and/or at a pressure of 1 to 5 bar.

5. Method according to any of claims 1 to 4,
**characterised in that**
the foam particles are conditioned under increased pressure and the conditioned foam particles are fed to the material container and there held under a predetermined pressure lying preferably in the range of 2 to 5 bar.

6. Method according to claim 5,
**characterised in that**
the pressure in the pipe and in the mould are set so that, during feeding of the foam particles into the mould, it is somewhat lower than in the material container, and in particular in the mould is around 0.2 to 2 bar and in particular around 0.2 to 1 bar less than in the material container.

7. Method according to any of claims 1 to 6,
**characterised in that**
the foam particles are separated in the material container (2), wherein the separation is effected preferably by the feeding of a flow of gas or air and/or steam.

8. Method according to any of claims 1 to 7,
**characterised in that**
foam particles are used which are made of expandable thermoplastic polyurethane (eTPU).

9. Method according to any of claims 1 to 8,
**characterised in that**
the foam particles contain a blowing agent such as e.g. pentane, butane or CO2 or a mixture of these gases.

10. Method according to any of claims 1 to 9,
**characterised in that**
foam particles are used which are coated with a lubricant, or that the foam particles are coated with a lubricant before feeding to the mould (3).

11. Method according to any of claims 1 to 10,
**characterised in that**
the pipe (4) and/or the mould (3) are moved during filling.

12. Method according to any of claims 1 to 11,
**characterised in that**
powder or dust as lubricant is blown into the foam particles to be conveyed.

13. Method according to any of claims 1 to 12,
**characterised in that**
air or an inert gas is used as blowing gas.

14. Apparatus for the production of a foam particle part, comprising:
- a material container (2, 25),
- a conveyor pipe (4) which is connected to the material container (2, 25) in order to convey particle foams from the latter,
- a pressure running
- a pressurised air line (9) to provide propulsion air for the conveyance of the foam particles along the conveyor pipe (4),
- a mould (3) with a mould cavity (14) to which the conveyor pipe (4) is connected by means of a filling injector (10), so that foam particles may be conveyed from the material container along a conveyance path to the mould,
- a steam generator (17) to feed steam into the mould cavity (14) for thermoplastic welding of the foam particles in the mould cavity (14) into a foam particle part,
**characterised in that**
the steam generator (17) is connected by at least one steam line (18, 19, 20, 21) at a propulsion nozzle (8) situated downstream the material container (2) in the transport direction and / or at one or more areas of the conveyor pipe (4), so as to supply steam to the foam particles to be fed to the mould.

15. Apparatus according to claim 14
**characterised in that**
a control unit is provided, which, to execute the method according to any of claims 1 to 13, controls the apparatus.

## Revendications

1. Procédé de production d'une pièce en mousse de particules comprenant les étapes suivantes:
- l'alimentation de particules de mousse à partir d'un récipient de matériau par le moyen d'un conduit (4) dans un injecteur de remplissage (10), qui est couplé à un outil de moulage (3), dans lequel les particules de mousse sont transportées dans le conduit (4) avec un gaz propulseur,
- le soudage thermoplastique des particules de mousse dans l'outil de moulage (3) en appliquant de la chaleur pour donner la pièce en mousse,
dans lequel de la vapeur d'eau est ajoutée aux particules de mousse à alimenter, afin de les humidifier durant leur transport à partir du récipient de matériau vers l'outil de moulage, dans lequel la vapeur d'eau et ajoutée dans le conduit (4) par le moyen d'une buse d'injection et / ou par le moyen d'une buse de propulsion (8) situé à l'aval du récipient de matériau (2) dans une direction de transport.

2. Procédé selon la revendication 1,
**caractérisé en ce**
**que** les particules de mousse sont amenées du récipient de matériau le long d'un trajet de transport vers l'outil de moulage (3), dans lequel de la vapeur d'eau et ajoutée aux particules de mousse en plusieurs points le long du trajet de transport.

3. Procédé selon la revendication 1 ou 2,
**caractérisé en ce**
**que** la vapeur d'eau est en outre ajoutée au particules de mousse dans le récipient de matériau (2), et / ou à une section du conduit (4), en particulier dans la zone devant une courbe et / ou un goulot d'étranglement.

4. Procédé selon l'une quelconque des revendications 1 à 3,
**caractérisé en ce**
**qu'**on ajoute de la vapeur d'eau pour le transport à une température de 100 à 140 °C et / ou à une pression de 1 à 5 bars.

5. Procédé selon l'une quelconque des revendications 1 à 4,
**caractérisé en ce**
**que** les particules de mousse sont soumises à une augmentation de pression et les particules de mousse conditionnées sont ajoutées au récipient de matériau et maintenues à une pression prédéterminée, qui est préférablement dans la plage de 2 et 5 bars.

6. Procédé selon la revendication 5,
**caractérisé en ce**
**que** la pression dans le conduit et dans l'outil de moulage est ajustée de manière à être légèrement inférieure lors de l'introduction de particules de mousse dans l'outil de moulage que dans le récipient de matériau et notamment inférieure de 0,2 à 2 bars environ, en particulier de 0,2 à 1 bar environ dans l'outil de moulage que dans le récipient de matériau.

7. Procédé selon l'une quelconque des revendications 1 à 6,
**caractérisé en ce**
**que** les particules de mousse sont singularisées dans le récipient de matériau, la singularisation étant de préférence effectuée par un flux de gaz ou d'air et / ou de vapeur.

8. Procédé selon l'une quelconque des revendications 1 à 7,
**caractérisé en ce**
**que** l'on utilise des particules de mousse qui sont formées à partir de polyuréthane thermoplastique expansible (eTPU).

9. Procédé selon l'une quelconque des revendications 1 à 8,
**caractérisé en ce que** les particules de mousse contiennent un agent gonflant, tel que par exemple du pentane, du butane ou du CO2 ou un mélange de ces gaz.

10. Procédé selon l'une quelconque des revendications 1 à 9,
**caractérisé en ce**
**que** l'on utilise des particules de mousse qui sont revêtues d'un lubrifiant, ou que les particules de mousse sont revêtues avec un lubrifiant avant d'être fournies à l'outil de moulage.

11. Procédé selon l'une quelconque quelconque des revendications 1 à 10,
**caractérisé en ce**
**que** le conduit (4) et / ou l'outil de moulage (3) est déplacé pendant le remplissage.

12. Procédé selon l'une quelconque des revendications 1 à 11,
**caractérisé en ce**
**qu'**on injecte de la poudre ou de la poussière en tant que lubrifiant aux particules de mousse à être transportées.

13. Procédé selon l'une quelconque des revendications 1 à 12,
**caractérisé en ce**
**que** l'on utilise en tant que gaz de propulsion de l'air ou un gaz inerte.

14. Dispositif pour la fabrication d'une pièce en mousse de particules, comprenant:
- un récipient de matériau (2, 25),
- un conduit (4) relié au récipient de matériau (2, 25) pour transporter des particules mousses à partir de celui-ci,
- un conduit d'air pressurisé (9) pour l'alimentation en air pressurisé pour le transport de particules de mousse le long du conduit (4),
- un outil de moulage (3) avec un espace de moulage (14), auquel le conduit (4) est reliée au moyen d'un injecteur de remplissage (10), de sorte que des particules de mousse peuvent être transportées à partir du récipient de matériau le long d'un trajet de transport vers l'outil de moulage,
- un générateur de vapeur (17) pour l'alimentation en vapeur d'eau dans l'espace de moulage (14) pour le soudage thermoplastique des particules de mousse dans l'espace de moulage (14) pour donner une pièce de mousse de particules,
**caractérisé en ce**
**que** le générateur de vapeur (17), par le moyen d'au moins une ligne de vapeur (18, 19, 20, 21) est relié à une buse de propulsion (8) située à l'aval du récipient de matériau (2) dans une direction de transport et / ou à une ou plusieurs zones du conduit (4), afin de fournir de la vapeur d'eau au particules de mousse à être alimenté dans l'outil de moulage.

15. Dispositif selon la revendication 14,
**caractérisé en ce**
**qu'**il est prévu un dispositif de commande qui commande un appareil pour la mise en oeuvre du procédé selon l'une quelconque des revendications 1 à 13.
